# EUROPEAN PATENT SPECIFICATION

(11) **EP 2 641 766 B1**
(45) Date of publication and mention of the grant of the patent: **08.04.2015**
(21) Application number: 13159465.7
(22) Date of filing: 15.03.2013
(51) Int. Cl.: B60K 11/04, F28F 9/00

(54) **Collapsible suspension for a cooling module**
Komprimierbare Halterung für Kühlmodul
Suspension comprimable pour module de refroidissement

(30) Priority: 19.03.2012 IT TO20120239
(43) Date of publication of application: 25.09.2013
(73) Proprietor: DENSO THERMAL SYSTEMS S.p.A., 10046 Poirino (Torino) (IT)
(72) Inventor: Masciandara, Eustachio, I-10046 Poirino (Torino) (IT)
(74) Representative: Vanzini, Christian

(56) References cited:
- EP-A1- 2 080 690
- WO-A1-2004/090453
- DE-A1- 10 051 567
- DE-A1-102004 013 730

## Description

The present invention relates to fastening systems provided for mounting heat exchangers inside vehicles, and particularly for mounting cooling modules inside vehicles.

There are known radiator mounting solutions which require the use of replaceable disposable components, which in the case of a frontal impact break to prevent the impact stresses from being transmitted to an excessive degree to the radiator body, thereby preventing damage to the latter.

For example, EP 0870638 describes a manifold reservoir of a heat exchanger of a motor vehicle, comprising a fastening peg of plastic material which is configured to break in case of impact, and also allows the fitting of a replacement peg to restore the correct positioning of the exchanger on the corresponding support structure.

EP 1205332 describes a reservoir of plastic material for a vehicle radiator, comprising a fastening peg of plastic material which is configured to break in case of impact, and further comprising a seat for mounting a replacement peg to restore the correct positioning of the exchange on the corresponding support structure.

Both of the solutions outlined above require the manifold reservoir to be configured in order to create a support area for the replacement component (the peg).

WO 2004/090453 discloses a bracket for mounting a heat exchanger on a support structure of a vehicle, composed of:
a bracket body of plastic material, comprising a structure side portion fastenable to said support structure and an exchanger side portion in which a cavity is formed, and
an anti-vibration member of elastomeric material housed within said cavity, said anti-vibration member having a hole engageable with a mounting pin of said heat exchanger,
wherein said cavity is bounded on one side by a controlled-breakage wall portion formed in one piece with said bracket body, and positioned in a facing relationship with said anti-vibration member, and
wherein said cavity of the bracket body is further bounded by a containment wall portion formed in one piece with said bracket body and separated from said controlled-breakage wall portion, in the direction of the perimeter of the cavity, by cut-outs positioned on opposite sides of the controlled-breakage wall portion.

One object of the present invention is therefore to provide a collapsible mounting solution which can be used in a general way on all heat exchangers for vehicles, and which does not require any specific preparation of the structure of the exchanger, or particularly of the manifolds.

The invention therefore proposes a bracket for mounting a heat exchanger on a support structure of a vehicle, composed of:
a bracket body of plastic material, comprising a structure side portion fastenable to said support structure and an exchanger side portion in which a cavity is formed, and
an anti-vibration member of elastomeric material housed within said cavity, said anti-vibration member having a hole engageable with a mounting pin of said heat exchanger,
wherein said cavity is bounded on one side by a controlled-breakage wall portion formed in one piece with said bracket body, and positioned in a facing relationship with said anti-vibration member,
wherein said cavity of the bracket body is further bounded by a containment wall portion formed in one piece with said bracket body and separated from said controlled-breakage wall portion, in the direction of the perimeter of the cavity, by cut-outs positioned on opposite sides of the controlled-breakage wall portion, and
wherein one or more openings are formed on the containment wall portion, said anti-vibration member being provided, on its lateral periphery, with one or more tooth projections snap-fittable into said openings.

Preferred embodiments of the invention are defined in the dependent claims, which are to be considered as an integral part of the present description.

Further characteristics and advantages of the mounting bracket according to the invention will be made clearer by the following detailed description of an embodiment of the invention, given with reference to the attached drawings which are provided purely as nonlimiting illustrations, in which:
Figure 1 is a perspective view of a mounting bracket according to the invention, which connects a heat exchanger to a support structure, seen from the front;
Figure 2 is an exploded view of the bracket of Fig. 1; and
Figure 3 is a further exploded view of the bracket, seen from the rear.

In the present description, the spatial terms used, such as "front" and "rear", refer to the condition in which the bracket is used.

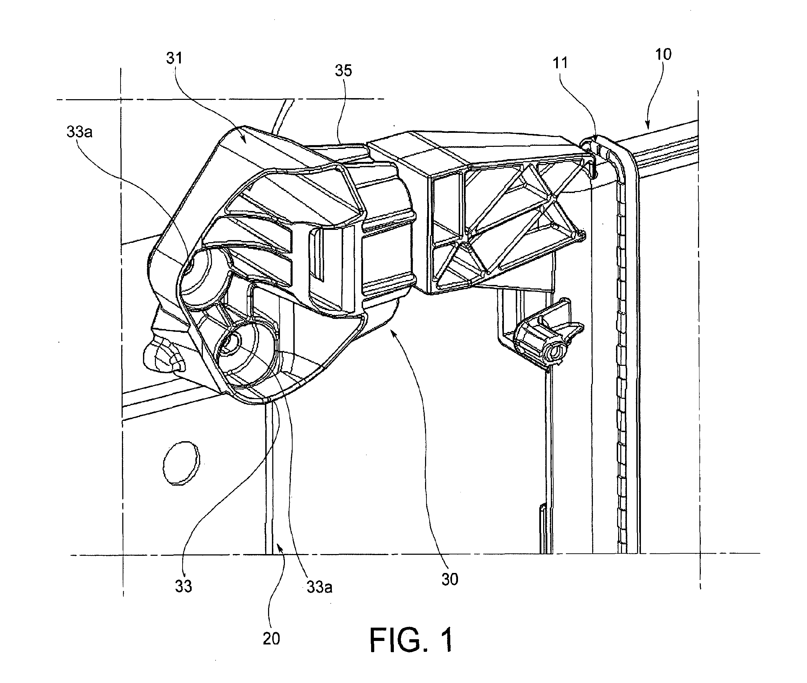

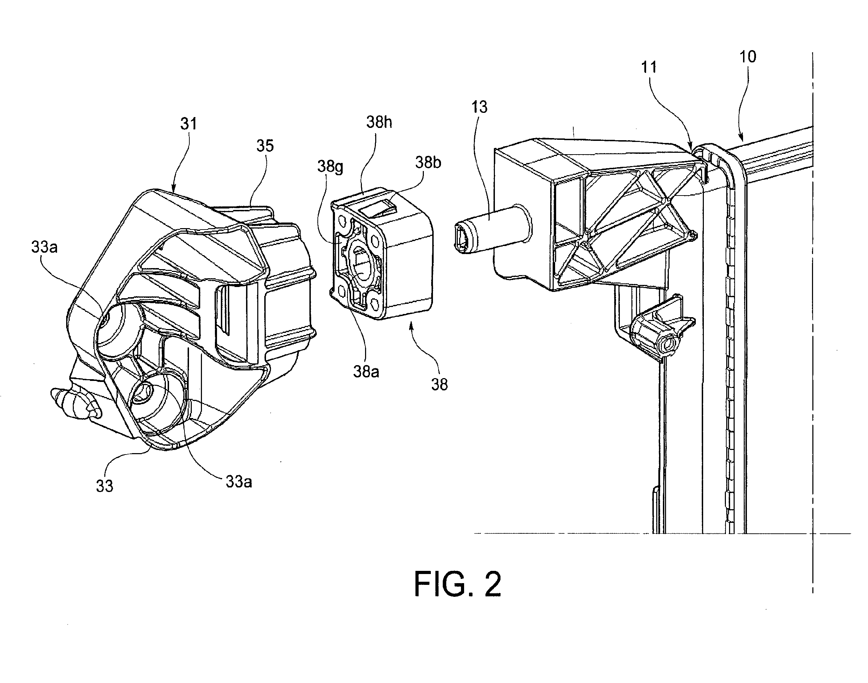

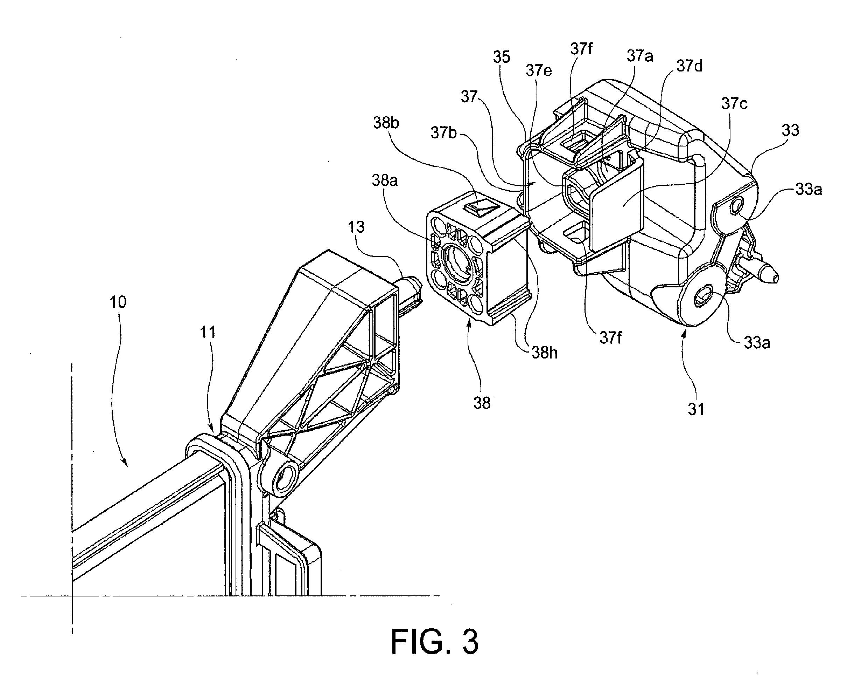

The drawings show a corner portion of heat exchanger, particularly a radiator for a vehicle, which is indicated as a whole by 10. The exchanger is conventionally provided with a pair of manifold reservoirs, of which one, indicated by 11, is visible in the drawings. At or in the proximity of each terminal portion of the body of the manifold reservoir 11 there is formed a mounting pin, of which only one, indicated by 13, is visible in Figures 2 and 3. Figure 1 also shows a support structure 20, to which the exchanger 10 is connected, and by which it is supported.

The drawings also show a mounting bracket 30, which connects the heat exchanger 10 to the support structure 20. At or in the proximity of the other three corners of the exchanger there are provided corresponding mounting brackets, which for the purposes of the invention are functionally identical to that which is shown.

The bracket 30 is composed of a bracket body 31 of plastic material, comprising a structure side portion 33, fastenable to the support structure 20, and an exchanger side portion 35. In the illustrated example, the structure side portion 33 of the bracket 30 has holes 33a for the passage of screws (not shown) for fastening the bracket body 31 to the support structure 20.

In the exchanger side portion 35 of the bracket 30 there is formed a cavity 37 having an essentially polygonal cross section, visible in Figure 3. This cavity 37 has a bottom 37a, and is delimited laterally by a containment wall portion 37b and by a controlled-breakage wall portion 37c, the latter being positioned on a rear side of the cavity 37. The wall portions 37b and 37c are made in one piece with the bracket body 31, and they are separated from each other in the direction of the perimeter of the cavity 37 by cut-outs positioned on opposite sides of the controlled-breakage wall portion 37c.

The controlled-breakage wall portion 37c is connected to the bracket body 31 by means of a connecting portion 37d which projects rearwards from the bracket body 31, and which is angled with respect to the controlled-breakage wall portion 37c.

As a result of the arrangement described above, the controlled-breakage wall portion 37c forms a tab having a controlled-breakage line, which, depending on the design of the controlled-breakage wall portion 37c and of the connecting portion 37d, can be positioned at the root of the controlled-breakage wall portion 37c or on the connecting portion 37d.

A reference projection 37e is formed on the bottom 37a of the cavity 37, and openings 37f are provided on the containment wall 37b, these openings being provided for mounting an anti-vibration member 38 of elastomeric material in the cavity 37.

The anti-vibration member 38 has a hole 38a engageable with the mounting pin 13 of the heat exchanger 10, and has a cross section which essentially mates with that of the cavity 37. In an embodiment which is not illustrated, the anti-vibration member could be co-moulded with the bracket body 31.

In the illustrated example, the lateral periphery of the anti-vibration member 38 is provided with one or more tooth projections 38b snap-fittable into the openings 37f formed in the containment wall portion 37b, and on the side facing the bottom 37a of the cavity 37 it has a recess 38g engageable with the reference projection 37e. On the rear side of the lateral periphery of the anti-vibration member 38 there is a pair of guide ribs 38h engageable with the opposite sides of the controlled-breakage wall portion 37c.

As shown in the drawings, in the condition of use the pin 13 extends transversely relative to the front-to-rear direction of the vehicle, and the controlled-breakage wall portion 37c, which also extends transversely relative to the front-to-rear direction of the vehicle, is positioned at the rear side of the heat exchanger, in a facing relationship with the anti-vibration member 38 into whose hole 38a the pin 13 is inserted.

If a frontal impact occurs, the stresses transmitted to the heat exchanger are transmitted by the pin 13, through the anti-vibration member 38, to the controlled-breakage wall portion 37c. By suitably designing the controlled-breakage wall portion 37c, it is possible to establish a threshold of intensity of impact above which the stresses transmitted to the the controlled-breakage wall portion 37c cause it to break, thereby preventing damage to the structure of the heat exchanger.

In order to restore the functionality of the system, it is simply necessary to remove the bracket from the support structure 20 and replace it with an unbroken one. The system is therefore both simple and economical to repair.

As can be seen, the bracket 30 is a part which is independent of the heat exchanger, which is connected to the bracket solely by means of the pin 13, a mounting member normally provided in heat exchangers intended to be mounted on vehicles. Consequently the present invention requires no structural modification of the exchanger to allow its use.

## Claims

1. Bracket for mounting a heat exchanger (10) on a support structure (20) of a vehicle, consisting of
a bracket body (31) of plastic material, comprising a structure side portion (33) fastenable to said support structure and an exchanger side portion (35) in which a cavity (37) is formed, and
an anti-vibration member (38) of elastomeric material housed within said cavity, said anti-vibration member having a hole (38a) engageable with a mounting pin (13) of said heat exchanger,
wherein said cavity is bounded on one side by a controlled-breakage wall portion (37c) formed in one piece with said bracket body, and positioned in a facing relationship with said anti-vibration member, and
wherein said cavity of the bracket body (31) is further bounded by a containment wall portion (37b) formed in one piece with said bracket body and separated from said controlled-breakage wall portion, in the direction of the perimeter of the cavity (37), by cut-outs positioned on opposite sides of the controlled-breakage wall portion (37c)
**characterized in that** one or more openings (37f) are formed on the containment wall portion (37b), said anti-vibration member being provided, on its lateral periphery, with one or more tooth projections (38b) snap-fittable into said openings.

2. Bracket according to Claim 1, wherein said controlled-breakage wall portion is connected to the bracket body (31) by means of a connecting portion (37d) which projects rearwards from the bracket body (31), and which is angled with respect to the controlled-breakage wall portion (37c).

3. Bracket according to any of the preceding claims, wherein a reference projection (37e) is formed on the bottom (37a) of the cavity (37), said anti-vibration member having, on its side facing to the bottom (37a) of the cavity (37), a recess (38g) engageable with the reference projection (37e).

4. Bracket according to any of the preceding claims, wherein said anti-vibration member has, on its lateral periphery, a pair of guide ribs (38h) engageable with opposite sides of the controlled-breakage wall portion (37c) of the bracket body (31).

## Patentansprüche

1. Halterung zum Anbringen eines Wärmetauschers (10) auf einer Trägerstruktur (20) eines Fahrzeugs , die aus Folgenden besteht:
einem Halterungskörper (31) aus Kunststoffmaterial, der einen Strukturseitenabschnitt (33), der an der Trägerstruktur befestigbar ist, und einen Tauscherseitenabschnitt (35), in dem ein Hohlraum (37) gebildet ist, aufweist, und
einem schwingungsgeschützten Bauglied (38) aus elastomerem Material, das in dem Hohlraum untergebracht ist, wobei das schwingungsgeschützte Bauglied ein Loch (38a) aufweist, das mit einem Anbringzapfen (13) des Wärmetauschers in Eingriff gebracht werden kann,
wobei der Hohlraum auf einer Seite durch einen Kontrollierter-Bruch-Wandabschnitt (37c) begrenzt ist, der in einem Stück mit dem Halterungskörper gebildet ist, und in einer zugewandten Beziehung zu dem schwingungsgeschützten Bauglied positioniert ist, und
wobei der Hohlraum des Halterungskörpers (31) ferner durch einen Einschluss-Wandabschnitt (37b) begrenzt ist, der in einem Stück mit dem Halterungskörper gebildet ist und in der Richtung des Umfangs des Hohlraums (37) durch Ausschnitte,
die auf gegenüberliegenden Seiten des Kontrollierter-Bruch-Wandabschnitts (37c) positioniert sind, von dem Kontrollierter-Bruch-Wandabschnitt getrennt ist
**dadurch gekennzeichnet, dass** eine oder mehrere Öffnungen (37f) an dem Einschluss-Wandabschnitt (37b) gebildet sind, wobei das schwingungsgeschützte Bauglied an seiner seitlichen Peripherie mit einem oder mehreren Zahnvorsprüngen (38b) versehen ist, der beziehungsweise die in die Öffnungen einrastbar ist beziehungsweise sind.

2. Halterung gemäß Anspruch 1, bei der der Kontrollierter-Bruch-Wandabschnitt mittels eines Verbindungsabschnitts (37d), der von dem Halterungskörper (31) nach hinten vorspringt und der bezüglich des Kontrollierter-Bruch-Wandabschnitts (37c) abgewinkelt ist, mit dem Halterungskörper (31) verbunden ist.

3. Halterung gemäß einem der vorhergehenden Ansprüche, bei der ein Referenzvorsprung (37e) auf dem Boden (37a) des Hohlraums (37) gebildet ist, wobei das schwingungsgeschützte Bauglied auf seiner dem Boden (37a) des Hohlraums (37) zugewandten Seite eine Aussparung (38g) aufweist, die mit dem Referenzvorsprung (37e) in Eingriff gebracht werden kann.

4. Halterung gemäß einem der vorhergehenden Ansprüche, bei der das schwingungs-geschützte Bauglied an seiner seitlichen Peripherie ein Paar Führungsrippen (38h) aufweist, die mit gegenüberliegenden Seiten des Kontrollierter-Bruch-Wandabschnitts (37c) des Halterungskörpers (31) in Eingriff gebracht werden können.

## Revendications

1. Console pour le montage d'un échangeur de chaleur (10) sur une structure support (20) d'un véhicule, constituée de
un corps de console (31) en matière plastique, comprenant une partie côté structure (33) pouvant être fixée à ladite structure support et une partie côté échangeur (35) dans laquelle est formée une cavité (37), et
un élément anti-vibration (38) en matière élastomère, logé à l'intérieur de ladite cavité, ledit élément anti-vibration comportant un trou (38a) dans lequel peut venir en prise une broche de montage (13) dudit échangeur de chaleur,
dans laquelle ladite cavité est délimitée d'un côté par une partie de paroi à rupture contrôlée (37c) formée en une pièce avec ledit corps de console, et positionnée en face dudit élément anti-vibration, et
dans laquelle ladite cavité du corps de console (31) est délimitée en outre par une partie de paroi de confinement (37b) formée en une pièce avec ledit corps de console est séparée de ladite partie de paroi à rupture contrôlée, dans la direction du périmètre de la cavité (37), au moyen de découpes positionnées sur les côtés opposés de la partie de paroi à rupture contrôlée (37c)
**caractérisée en ce qu'**une ou plusieurs ouvertures (37f) sont formées sur la partie de paroi de confinement (37b), ledit élément anti-vibration étant muni sur sa périphérie latérale d'une ou plusieurs projections en forme de dent (38b) pouvant être encliquetées par pression dans lesdites ouvertures.

2. Console selon la revendication 1, dans laquelle ladite partie de paroi à rupture contrôlée est reliée au corps de console (31) au moyen d'une partie de raccordement (37d) qui se projette vers l'arrière par rapport au corps de console (31), et qui est inclinée par rapport à la partie de paroi à rupture contrôlée (37c).

3. Console selon l'une quelconque des revendications précédentes, dans laquelle une projection de référence (37e) est formée sur le fond (37a) de la cavité (37), ledit élément anti-vibration comportant, sur son côté tourné vers le fond (37a) de la cavité (37), une partie en retrait (38g) dans laquelle peut venir en prise la projection de référence (37e).

4. Console selon l'une quelconque des revendications précédentes, dans laquelle ledit élément anti-vibration comporte, sur sa périphérie latérale, une paire d'arêtes de guidage (38h) pouvant venir en prise avec les côtés opposés de la partie de paroi à rupture contrôlée (37c) du corps de console (31).
